Europäisches Patentamt

(19) European Patent Office

Office européen des brevets

(11) Publication number: **0 267 641 B1**

# EUROPEAN PATENT SPECIFICATION

(45) Date of publication of patent specification: **10.04.91**　(51) Int. Cl.⁵: **E04F 15/16**

(21) Application number: **87202036.7**

(22) Date of filing: **22.10.87**

(54) **A method for forming a waterproof connection between floor covering webs or strips situated in mutually perpendicular planes, and waterproof connection thus obtained.**

(30) Priority: **30.10.86 NL 8602736**

(43) Date of publication of application:
　**18.05.88 Bulletin 88/20**

(45) Publication of the grant of the patent:
　**10.04.91 Bulletin 91/15**

(84) Designated Contracting States:
　**AT BE CH DE FR GB IT LI LU NL SE**

(56) References cited:
　**DE-A- 2 552 571**
　**FR-A- 1 003 389**
　**FR-A- 1 574 558**
　**GB-A- 735 795**
　**US-A- 3 549 471**

(73) Proprietor: **Forbo-Krommenie B.V.**
　**Industrieweg 12**
　**NL-1566 JP Assendelft(NL)**

(72) Inventor: **Butter, Hendrik Johannes**
　**27,Ruinelaan**
　**NL-1861 LK Bergen(NL)**

(74) Representative: **Mommaerts, Johan Hendrik,**
　**Dipl.-Phys.**
　**Octrooibureau Lux Willem Witsenplein 4**
　**NL-2596 BK Den Haag(NL)**

EP 0 267 641 B1

Rank Xerox (UK) Business Services

## Description

It becomes more and more usual, in so-called wet rooms such as bathrooms, kitchens, laboratories and the like, to provide waterproof floors made of PVC floor covering material, which should join, in a waterproof manner, similar portions of said material extending also over at least the skirting height over a substantial part of the upstanding walls, and which are glued thereon. It is known to interconnect two two pieces of wood on interconnecting pespindicular surfaces by heating a thermoplastic material in-situ between the edges of said pieces of wood (FR-A-1003389). This system is not suitable for the PVC coverings of the present application.

The walls often consist of another building material than that of the floor, and also the materials of the different walls can be different.

For sealing joints between contiguous webs of floor covering material of this kind glued on a floor, and in particular for avoiding damage to edges of webs joining each other in a joint, wires of a thermoplastic PVC joint cement are used which, by means of a heated gun or the like, can be applied in the joints in such a soft condition that a good adhesion to the edges of said webs is obtained. For closing in a waterproof manner the joints between webs of said covering material applied on mutually perpendicular walls and floors, such a cement has appeared to be unsuitable. Said cement adheres only to the PVC covering material and not to the floor or wall, and can become permeable under the influence of shrink or expansion and difference in behaviour of the supporting surfaces. In the case of continuous webs of such a covering material extending over two contiguous and mutually perpendicular surfaces, the adhesion and support thereof in the corner between the contiguous surfaces will be insufficient, and, when being damaged, moisture can penetrate into the hollow corner space, which will lead, in the end, to rot or other attack.

The problem to be solved lies not in the perpendicularity of the supporting surfaces, but rather in obtaining a waterproof connection between the webs of covering material meeting at the junction of the supporting surfaces.

It is an object of the invention to provide a method for forming a waterproof connection, which, under all circumstances, will avoid said objections. 1

To that end the method according to the present application is given in the characterising portion of claim 1.

It is preferred to use for the second wire, a cement which adheres to that of the first wire.

It has appeared that the thermoplastic joint cement used for floor covering material of the linoleum type, in particular an ether vinyl acetate copolymer not only adhere to all current building materials, but also to the PVC floor covering material used for wet spaces. Although said cement is more expensive than the current PVC joint cement, it is no objection if, then, an effective waterproof condition is e nsured. The second cement wire to be applied in a joint between mutually perpendicular web portions might consists of a cheaper PVC joint cement, if by flowing of the first one a sufficient adhesion to the webs will be obtained, but it is preferred to use the same cement in both cases.

Furthermore the invention relates to a waterproof connection between contiguous floor covering webs and their supporting surfaces.

The invention will be elucidated below by reference to a drawing, showing in:

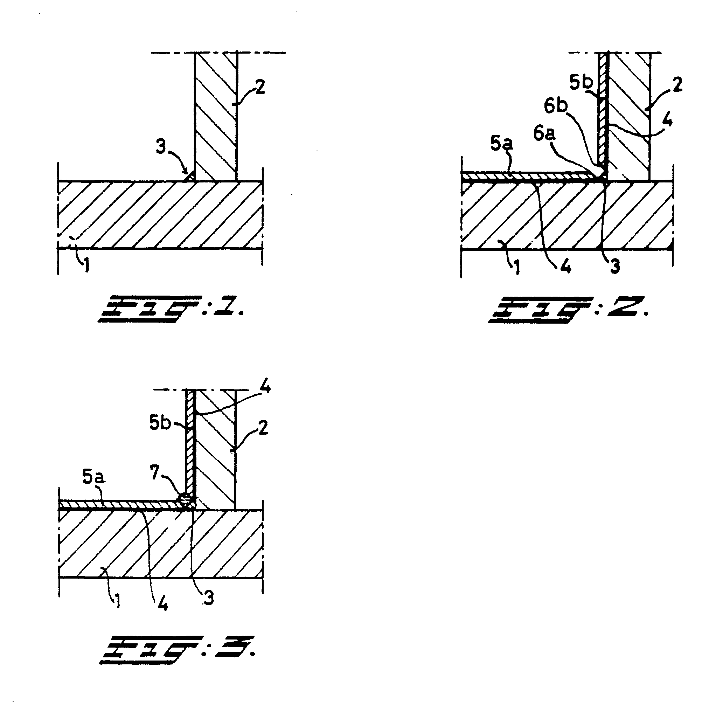

Figs. 1..3 diagrammatic cross-sections for elucidating three subsequent steps of the method according to the invention.

In the drawing a diagrammatic cross-section of a floor 1 and a contiguous vertical wall 2 is shown. Said floor 1 and wall 2 can consist of arbitrary and in particular mutually different building materials. The floor 1 consists, in partioular, of concrete, possibly provided with a mortar layer, or of wood or wood-containing board material. The wall 2 consists, for instance, of bricks, gas concrete or plastic blocks, plaster boards or other materials used for separating walls.

On the floor 1 and at least a part of the wall 2, a PVC floor covering material is now to be applied in a waterproof manner for satisfying the requirements for a waterproof space. It will, moreover, be clear that, although only one wall is shown, the space will be defined by four walls 2 which, in pairs, join each other perpendicularly, and also additional re-entrant or salient parts can be present in said space.

The first step of the method according to the invention comprises providing, in the corner between the floor 1 and a contiguous wall 2, a cement layer 3 consisting of a thermoplastic material which adheres to both the current building materials and the PVC floor covering material to be used. Applying said cement layer 3 is preferably done by means of a gun, by means of which a wire of the cement to be used can be softened by heating, and can be expelled in the softened condition. Such guns are known.

Subsequently, as shown in Fig. 2, a suitable glue layer 4 is applied on the floor 1 and the wall 2, in order to glue thereon webs or strips 5a and 5b resp. The edges 6a and 6b resp. of said webs or strips are, then, applied against the cement layer 3, and, if required, can previously be slightly chamfered.

Finally, as shown in Fig. 3, a second softened cement layer 7 is applied in the corner between both webs or strips 5a and 5b, said layer adhering to said webs or strips and also to the first cement layer 3.

In this manner a sealing between both webs or strips 5a and 5b is obtained, which is strongly adhered to the under-lying supporting surfaces 1 and 2 and to the webs or strips 5a and 5b.

For the present method any thermoplastic cement is suitable which adheres to both the current building materials and to the PVC floor covering material, and which can be sufficiently softened for flowing into the corner between a floor 1 and a wall 2 and in the joint between both webs or strips 5a and 5b. In practice, a thermoplastic joint cement has appeared to be specifically suitable, which has already been used for closing seams or joints in linoleum floors, and which consists, in particular, of an ether vinyl acetate copolymer. For it has appeared that said cement not only excellently adheres to all prevailing building materials, but also to PVC floor covering materials. Moreover said cement is so that not only expansion and shrink phenomena of the floor covering material but also differences in behaviour of the different building materials can be accommodated without disturbing the sealing. In the normal use of said cement for linoleum floors the adhesion on the floor material did not play a part, since, then, only protectio n of the contiguous edges of the (in particular somewhat chamfered) linoleum webs was intended. For linoleum is unsuitable for repeatedly wet floors.

It will be clear that also in the case of trihedral corners between a floor and two contiguous walls a good sealing will be obtained, since in the apex of the corner bcth cement layers 3 and 7 will provide an effective sealing, which was not possible when using the current methods.

In this manner an efficient sealing is obtained, by means of which penetration of moisture below the floor and wall covering of PVC floor covering material can be completely avoided, and this in the case of arbitrary building materials for the floor and the walls of a wet space.

## Claims

1.  A method for forming a waterproof connection between covering webs or strips (5), in particular PVC covering material, situated on mutually perpendicular planar supporting surfaces (1,2), **characterised** in that, firstly, a wire (3) of a softened thermoplastic joint cement is applied in the corner between the supporting surfaces, which cement adheres to both the material of the supporting surfaces (1, 2) and to the covering material (5), in that, subsequently, both webs (5a, 5b) are glued to the contiguous supporting surfaces (1, 2), the edges (6a, 6b) of both webs (5a, 5b) facing each other and remaining at a small mutual distance, and in that, finally, the space between both webs is filled with a second wire (7) of softened thermoplastic joint cement.

2.  The method of claim 1, **characterised** in that the second cement layer (7) adheres to the first one (3).

3.  The method of any one of claims 1 and 2, **characterised** in that the joint cement is a thermoplastic joint cement used for floor covering material of the linoleum type, and in particular an ether vinyl acetate copolymer.

## Revendications

1.  Méthode pour former une liaison imperméable entre feuilles ou bandes (5) de revêtement, en particulier en un matériau de revêtement en PVC, posées sur des surfaces supports planes (1, 2) perpendiculaires entre elles, caractérisée en ce que, premièrement, un cordon (3) de mastic de joint thermoplastique ramolli est appliqué dans le coin entre les surfaces supports, le mastic adhèrant à la fois au matériau des surfaces supports (1, 2) et au matériau de revêtement (5), en ce que, ensuite, les deux feuilles (5a, 5b) sont collées aux surfaces supports contiguës (1, 2), les bords (6a, 6b) des deux feuilles (5a, 5b) se faisant face et étant à une petite distance l'un de l'autre, et en ce que, finalement, l'espace entre les deux feuilles est rempli d'un second cordon (7) de mastic de joint thermoplastique ramolli.

2.  Méthode selon la revendication 1, caractérisée en ce que la seconde couche de mastic (7) adhère à la première (3).

3.  Méthode selon l'une des revendications 1 et 2, caractérisée en ce que le mastic de joint est un mastic de joint thermoplastique utilisé pour un matériau de revêtement de sol du type linoléum, et en particulier un copolymère d'acétate de vinyle d'éther.

## Ansprüche

1.  Verfahren zur Ausbildung einer wasserundurchlässigen Fuge zwischen abdeckenden Bahnen oder Streifen (5), insbesondere von PVC-Deckmaterial, das an zueinander rechtwinklig verlaufenden, ebenen tragenden Flächen (1, 2) angebracht ist, dadurch gekennzeichnet, daß zuerst ein Draht (3) aus weich gemachtem thermoplastischem Fugenkitt in der Ecke zwischen den tragenden Flächen aufgetragen wird, wobei sich der Kitt mit dem Material der tragenden Flächen (1, 2) und dem Deckmaterial (5) verklebt, daß anschließend beide Bahnen (5a, 5b) mit den aneinander angrenzenden tragenden Flächen (1, 2) verklebt werden, wobei die Kanten (6a, 6b) beider Bahnen (5a, 5b) sich einander gegenüberliegen und in einem geringen Abstand zueinander bleiben, und daß schließlich der Raum zwischen beiden Bahnen mit einem zweiten Draht (7) aus weich gemachtem thermoplastischem Fugenkitt gefüllt wird.

2. Verfahren nach Anspruch 1, dadurch gekennzeichnet, daß sich die zweite Kittschicht (7) mit der ersten (3) verklebt.

3. Verfahren nach einem der Ansprüche 1 und 2, dadurch gekennzeichnet, daß der Fugenkitt ein für Bodendeckmaterial der Linoleum-Art verwendeter thermoplastischer Fugenkitt, und insbesondere ein Äthervinylacetatcopolymer, ist.

FIG:1.

FIG:2.

FIG:3.